# EUROPEAN PATENT APPLICATION

(11) **EP 1 376 835 A1**
(43) Date of publication of application: **02.01.2004**
(21) Application number: 03013937.2
(22) Date of filing: 20.06.2003
(51) Int. Cl.: H02M 1/00, H01R 31/06, H01R 13/66

(54) **Capacitor module for power factor correction equipments**

(30) Priority: 21.06.2002 IT VI20020132
(71) Applicant: VAREL SRL, 36100 Vicenza (IT)
(72) Inventor: Voltan, Francesco, 35100 Padova (IT)
(74) Representative: Terreran, Gabrio

(57) **Abstract**

The invention realises a capacitor module (1, 100, 101) which comprises a capacitor bank (3) and electrical connection means (4) to a power factor correction equipment (A) of the type comprising a disconnector group (S) and at least one regulator (R). The electrical connection means (4) comprise a quick coupling connector (5a, 5b, 5c).

## Description

The invention concerns a capacitor module for power factor correction equipments of the type using capacitors particularly suitable for realising the power factor correction of medium-low power charges.

As is known, power factor correction equipments are inserted between the charge and the power distribution network to nullify or at least decrease the phase difference between current and voltage.

This advantageously allows the losses by Joule effect on the power line to be decreased thus increasing the overall yield of the system.

Power factor correction equipments with capacitors for medium-low powers of the known type substantially comprise a box inside of which a disconnector group, a regulator and one or more capacitor modules are housed.

Each module is equipped with means for electrical connection to the other parts of the equipment and comprises a frame known as a drawer which is fixed to the box and which supports one or more capacitor banks.

Each bank, is connected upstream to the aforementioned connection means, comprises a protection circuit generally consisting of fuses and a remote control switch commanded by the regulator which connects/disconnects one or more capacitors electrically connected to each other to/from the power circuit.

The realisation of the equipment foresees that, once the maximum charge applicable to the equipment itself has been decided, one proceeds to the sizing of the module and thus of the various capacitor banks.

The assembly of the equipment foresees that each capacitor module, and the respective capacitor banks be connected one by one to the other parts of the power factor correction equipment for manual wiring through suitable connection conductor wires.

A first drawback of the described module consists of the fact that the means for connection to the power factor correction equipment consist of terminal boards.

This makes it necessary for an expert operator to intervene who, following the circuit diagrams of the equipment, takes care of the manual wiring and more precisely of fixing the wire-ends of the inputs and outputs of the module in the corresponding power boards of the equipment.

This increases the danger of errors in the wiring of the equipment and has a substantial impact upon the overall cost of the equipment itself.

Another drawback consists of the fact that in the case of failure of a capacitor bank it is necessary to manually disconnect all of the wire-ends of each module with a needless waste of time.

Indeed, to be able to identify and replace or repair the damaged capacitor bank, it is generally necessary to detach the drawer from the box with the obvious difficulties and costs due to machine idle time.

It should be noted that in the case of irreparable failure of a capacitor bank, the user is forced to replace all of the drawer and thus also the good banks with a clear waste of resources.

It should also be noted that to carry out such laborious operations it is necessary, like in the assembly step of the equipment, to use a qualified operator able at least to interpret the circuit diagrams of the equipment.

For such reasons the user very often in the case of failure, in order to avoid possible further damage to the equipment due, for example, to bad wiring, prefers to send the manufacturer the entire equipment with the consequent clear additional costs and drawbacks.

The purpose of the present invention is to overcome said drawbacks.

In particular, a first purpose of the invention is to realise a capacitor module for power factor correction equipments of medium-low powers of the type with capacitors which allows rapid installation and replacement of each module.

Another purpose is to realise a module which can be replaced by anybody in a simple manner without the need to know or consult the circuit diagrams of the power factor correction equipment.

A further purpose is to realise a module which is cost-effective and reliable.

Said purposes are accomplished by a capacitor module which in accordance with the main claim comprises at least one capacitor bank and electrical connection means to a power factor correction equipments of the type comprising at least one regulator characterised in that said electrical connection means comprise at least one quick coupling connector.

According to a preferred embodiment the module houses a single capacitor bank.

This advantageously allows power factor correction equipments to be realised equipped with capacitor banks which can also be replaced individually.

Still advantageously, each module is equipped with means for indicating possible failures which allow immediate identification of the damaged module or bank.

Said purposes and advantages shall be outlined more clearly during the description of a preferred embodiment given for indicating and not limiting purposes with reference to the attached tables of drawings, where:
- figure 1 represents a capacitor module object of the present invention installed in a power factor correction equipment;
- figure 2 represents a side view of the module of figure 1;
- figure 3 represents a partially sectioned side view of an element of the module of figure 2;
- figure 4 represents another side view of the element of figure 3;
- figure 5 represents a side view of a variant embodiment of the module of figure 2;
- figure 6 represents a partially sectioned side view of an element of the module of figure 5;
- figure 7 represents a partially sectioned side view of the element of figure 6 in an intermediate work position;
- figure 8 represents a partially sectioned side view of the element of figure 6 in the final work position;
- figure 9 represents a partially sectioned side view of a variant embodiment of the element of figure 6;
- figure 10 represents a side view of a further variant embodiment of the module of figure 2.
- figure 11 represents an axonometric view of another element of the module of figure 2.

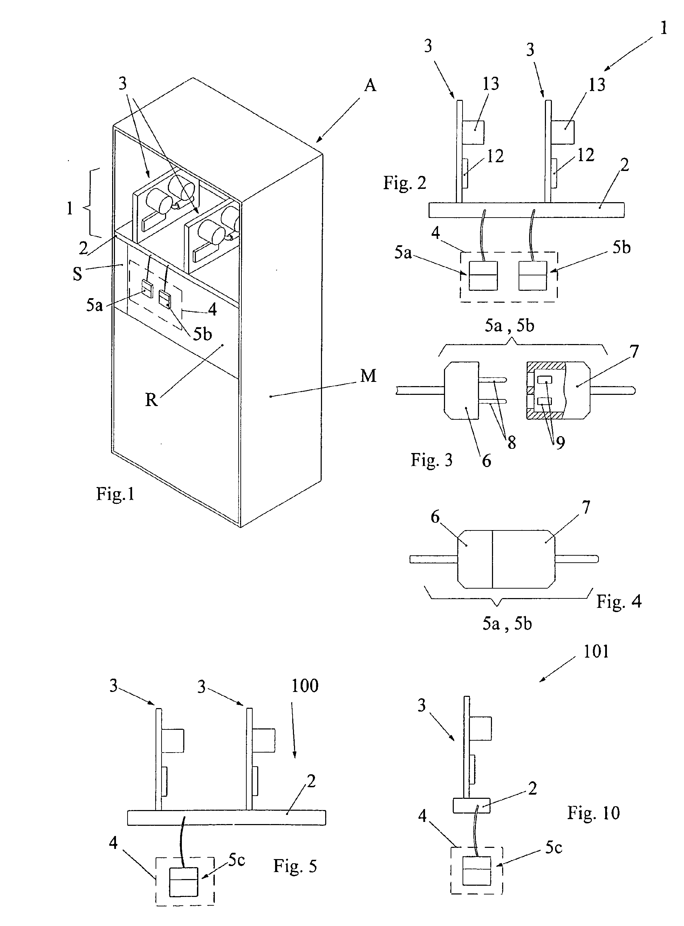

The capacitor module object of the present invention is represented in figure 1 and 2 where it is wholly indicated with reference numeral 1.

It comprises a support 2 where there are placed two capacitor banks 3 and means for electrical connection to a power factor correction equipment A of the type with capacitors, wholly indicated with 4.

The power factor correction equipment A, schematically represented in figure 1, comprises a box M inside which a disconnector group S and a regulator R is housed.

The invention foresees that such means 4 for electrical connection of the module 1 to the equipment A consist of quick coupling connectors 5a, 5b.

In particular, the connector 5a realises the connection of the module 1 with the auxiliary circuit and the connector 5b realises the connection with the power circuit.

Each connector 5a, 5b comprises, as represented in detail in figure 3, a male element 6 equipped with electrodes 8 suitable for coupling in the respective slots 9 belonging to a female element 7 connected to the equipment A.

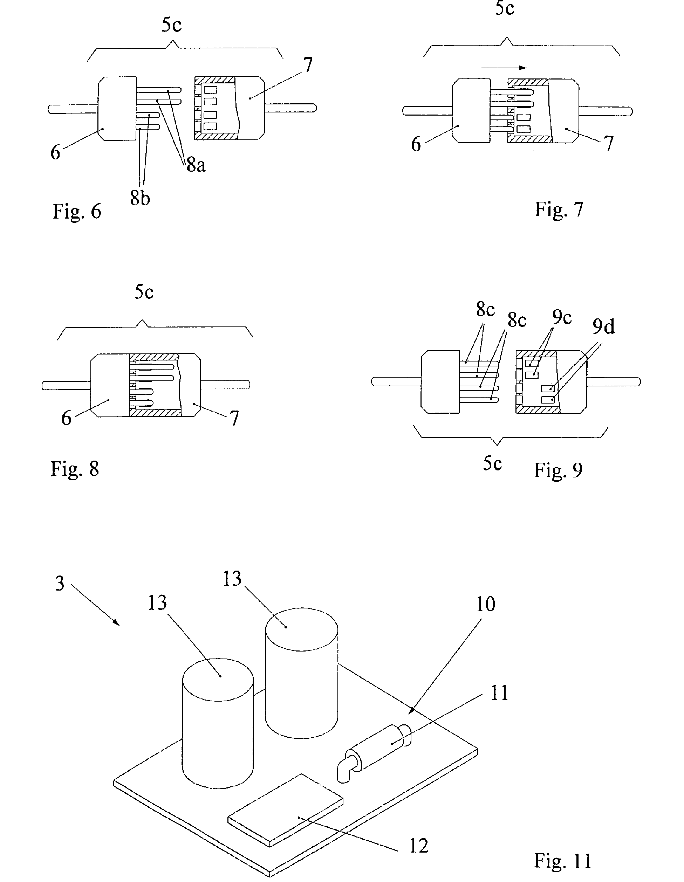

The electrical connection between the module 1 and the equipment A is thus realised immediately by simply inserting the male element 6 in the female element 7 as represented in detail in figure 4.

A variant embodiment wholly indicated with reference numeral 100 in figure 5 differs from the previous one in that the connection means 4 consists of a single connector 5c which realises the electrical connection of the module 100 both with the auxiliary circuit and with the power circuit.

It should be noted that the male element 6 of the connector 5c has electrodes 8a and 8b of different lengths.

More precisely, the power circuits are connected upstream to the longer electrodes 8a whereas the auxiliary circuits are connected to the shorter electrodes 8b.

This allows it to be ensured that upon the act of insertion of the male element 6 in the female element 7, represented in detail in figures 7 and 8, there is first the connection of the power circuits and then the connection of the auxiliary circuits.

Vice-versa in the removal of the male element 6 from the female element 7 there is first the detachment of the auxiliary circuits and then of the power circuits as required by the known safety provisions.

Alternatively, the connector 5c, as represented in detail in figure 9, can have the electrodes 8c all of the same length and the slots 9c, 9d arranged staggered from each other to realise the aforementioned connection sequence at distinct moments.

A further variant embodiment represented in detail in figure 10 differs from the previous one in that the module 101 comprises a single capacitor bank 3.

This advantageously allows, in the case of failure, both quick intervention, disconnecting and replacing exclusively the damaged bank and avoidance of the aforementioned waste.

As far as the capacitor bank 3, schematically represented in figure 11, is concerned, they each comprise a protection circuit 10 generally consisting of fuses 11 and a remote control switch 12 commanded by the regulator R and one or more capacitors 13 of variable value according to the desired power factor correction characteristics.

The inputs and outputs of the various components of each bank 3 are connected upstream to the connection means 4.

According to a different unrepresented embodiment the female element 7 belongs to the capacitor module 1 and the male element 6 is part of the equipment A.

As far as the capacitors 13 are concerned, they can be equally both of the monophase type and of the triphase type, according to the characteristics of the equipment to which the module 1 is applied.

The assembly of the equipment 1 foresees that the operator, provided attachment of the support 2 to the box M of the equipment A, inserts each male element in the corresponding female element.

Such a connection is therefore quite quick and can even be carried out by those without particular knowledge either of the power factor correction equipment A or of the module 1.

Both the assembly and intervention times in the case of failure are thus quite short and can be carried out directly by the user.

From the above it is clear how the proposed solution accomplishes the predetermined purposes.

Although the invention has been described with reference to the attached tables of drawings it can be the object of modifications, in embodiment, all of which are covered by the same inventive concept expressed by the claims listed hereafter and therefore protected by the present patent.

## Claims

1. Capacitor module (1, 100, 101) comprising at least one capacitor bank (3) and electrical connection means (4) to a power factor correction equipment (A) of the type comprising at least one disconnector group (S) and at least one regulator (R) **characterised in that** said electrical connection means (4) comprise at least one quick coupling connector (5a, 5b, 5c).

2. Module (1) according to claim 1) **characterised in that** said at least one quick coupling connector are at least two (5a, 5b), of which at least one is for the connection of the auxiliary circuits (5a) and at least one other for the connection of the power circuits (5b).

3. Module (100, 101) according to claim 1) **characterised in that** said at least one connector is one (5c) and realises both the connection of the power circuits and of the auxiliary circuits.

4. Module (1, 100, 101) according to claim 1) or 2) or 3) **characterised in that** said quick coupling connectors (5a, 5b, 5c) comprise at least one male element (6) electrically connected to said at least one capacitor bank (3), suitable for coupling with at least one corresponding female element (7) belonging to said equipment (A).

5. Module (1, 100, 101) according to claim 1) or 2) or 3) **characterised in that** said quick coupling connectors (5a, 5b, 5c) comprise at least one female element (7) electrically connected to said at least one capacitor bank (3), suitable for coupling with at least one corresponding male element (6) belonging to said equipment (A).

6. Module (1, 100, 101) according to claim 4) or 5) **characterised in that** said male element (6) has at least two electrodes (8a, 8b) of different lengths to ensure that during the insertion of said male element (6) in said female element (7) there is contact between said electrodes (8a, 8b) and said female element (7) at distinct moments.

7. Module (1, 100, 101) according to claim 8) **characterised in that** said longer electrodes (8a) realise the electrical connection with the power circuits.

8. Module (1, 100, 101) according to claim 6) or 7) **characterised in that** said shorter electrodes (8b) realise the electrical connection with the auxiliary circuits.

9. Module (1, 100, 101) according to any one of claims 4) to 8) **characterised in that** said female element (7) has the slots (9c, 9d) arranged staggered apart to ensure that during the insertion of said male element (6) in said female element (7) there is contact with the electrodes of said male element (6) at distinct moments.

10. Module (1, 100, 101) according to any one of the previous claims **characterised in that** said at least one capacitor bank (3) comprises at least one protection circuit (10), at least one remote control switch (12) commanded by said regulator (R) and one or more capacitors (13).

11. Module (1, 100, 101) according to claim 10) **characterised in that** said at least one protection circuit (10) comprises fuses (11).

12. Module (1, 100, 101) according to claim 10) or 11) **characterised in that** said capacitors (13) comprise at least one monophase capacitor.

13. Module (1, 100, 101) according to any one of the previous claims **characterised in that** said capacitors (13) comprise at least one triphase capacitor.

14. Module (101) according to any one of the previous claims **characterised in that** it comprises just one capacitor bank (3).

15. Capacitor module substantially as described with reference to the attached drawings.
